# EUROPEAN PATENT SPECIFICATION

(11) **EP 0 635 416 B1**
(45) Date of publication and mention of the grant of the patent: **21.05.1997**
(21) Application number: 94304618.5
(22) Date of filing: 24.06.1994
(51) Int. Cl.: B62D 25/10

(54) **A luggage compartment door**
Kofferraumtür
Porte d'un coffre à bagages

(30) Priority: 20.07.1993 GB 9314988
(43) Date of publication of application: 25.01.1995
(73) Proprietor: FORD MOTOR COMPANY LIMITED, Brentwood Essex (GB); Ford-Werke Aktiengesellschaft, 50735 Köln (DE); FORD MOTOR COMPANY, Dearborn, MI 48126 (US)
(72) Inventor: Davies, David Huw, Chelmsford, Essex CM2 9TZ (GB); Thwaites, Paul Michael, Basildon, Essex SS16 6TF (GB)
(74) Representative: Messulam, Alec Moses

(56) References cited:
- EP-A- 0 506 514
- DE-A- 3 940 016
- FR-A- 2 470 709
- FR-A- 2 672 017
- US-A- 4 251 103

## Description

This invention relates to a rear luggage compartment door for a motor vehicle, and in particular to a luggage compartment door on which vehicle lamps are mounted.

A rear luggage compartment door comprising an outer skin panel, an inner skin panel and a lamp cluster is known from DE-A-39 40 016.

For styling reasons it is often desirable to position the vehicle lamps across the full width of the rear of the car. At the same time however it is desirable that the sill over which objects must be lifted to place them in the boot of the car is as low as possible. These two requirements dictate that at least some of the vehicle lamps must be mounted on the luggage compartment door.

It is also desirable to manufacture the luggage compartment door so that there are no visible panel joins.

According to the present invention there is provided a rear luggage compartment door for a motor vehicle, the door comprising an outer skin panel, an inner skin panel and a lamp cluster, wherein the lamp cluster is mounted on an infill panel which is connected between outer and inner skin panels, and wherein the lamp cluster conceals the join between the outer skin panel and the infill panel.

In this specification, the term "lamp cluster" includes both passively and actively illuminated lamps and includes not only a single lamp but also any number of individual lamps.

In a preferred embodiment, the infill panel provides a mounting surface for the lamp cluster behind the surface of the outer skin panel, so that when the lamp cluster is mounted on the infill panel, the front face of the cluster is substantially flush with the outer skin panel.

The infill panel is preferably spot-welded to the outer skin panel, with the spot-welds being concealed by the lamp cluster. The connection of the infill panel to the inner skin panel can conveniently be through a clinched flange.

The shape of the infill panel is preferably such that when the luggage compartment door is seen in cross section, parallel to the vehicle centreline, a generally rectangular recess is formed at the bottom rear edge of the door, with the back of this recess formed by the infill panel and the roof of the recess formed partly by the infill panel and partly by a flange of the outer skin panel to which the infill panel is spot-welded.

The invention will now be further described, by way of example, with reference to the accompanying drawings, in which:
Figure 1 is a perspective view of the rear of a motor vehicle with a luggage compartment door in accordance with the invention;
Figure 2 is a cross-section, taken on the car centreline, and through the luggage compartment door of Figure 1; and
Figure 3 is an exploded view of the luggage compartment door shown in Figures 1 and 2.

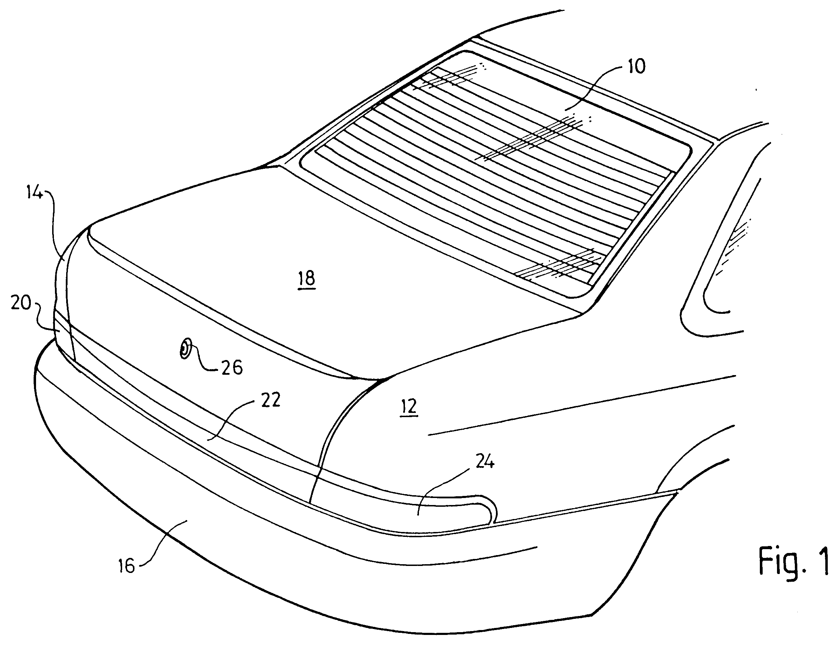

Figure 1 shows a motor vehicle which has a rear screen 10, rear wings 12 and 14, a rear bumper 16 and a rear luggage compartment door 18. The vehicle can be a wagon, a hatchback or a notchback, and the luggage compartment door can therefore be a tailgate or a boot (trunk) lid. The rear of the vehicle also has wrap-around lamp clusters 20, 22 and 24 which are styled to form a continuous band around the rear of the car. The clusters 20 and 24 are fixed and are mounted to the respective wings 14, 12. The cluster 22 is however mounted on the luggage compartment door 18 and will move with the door when the door is opened.

Although the lamp clusters 20, 22, 24 are shown uninterrupted, they will in practice be divided up into the various lamp functions, eg direction indicators, brake lamps, reversing lamps and fog lamps. The lamp cluster may also include one or more sections of passive lighting function, such as light reflectors.

The door 18 also has a lock button 26.

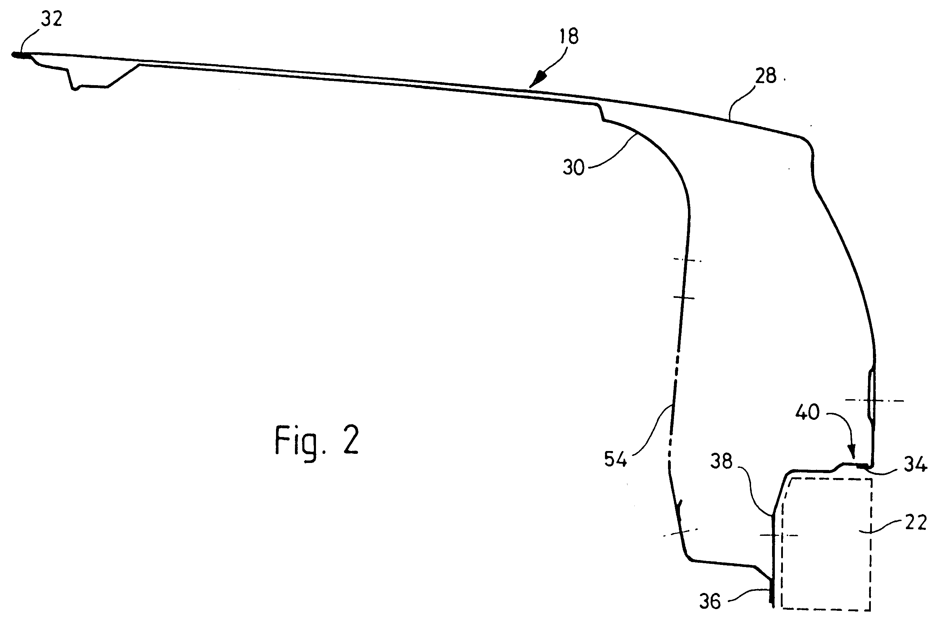

Figure 2 shows that the door is made up of an outer sheet metal skin panel 28 and an inner sheet metal skin panel 30. At the inboard end, these two skin panels are joined together by a clinched flange at 32, in a conventional manner. The door hinges are mounted adjacent this edge.

The outer skin panel 28 extends downwardly at the rear of the vehicle and ends in an inwardly turned flange 34. The inner panel 30 extends generally horizontally at the rear of the vehicle but ends in a downturned flange 36. To connect the flanges 34 and 36 and to complete the structural integrity of the door 18, an infill panel 38 is provided. The infill panel is spot-welded to the flange 34 and is clinched to the flange 36. When seen in cross-section the infill panel 38 is of a generally inverted L-section and it provides a recess in the bottom rear corner of the door into which the lamp cluster 22 can be fitted. In Figure 2 the position of the lamp cluster is indicated in dotted lines. It will be seen that the front edge of the cluster is substantially flush with the rear face of the outer panel 28, although this is not essential. It will also be seen that the spot-welded joint at 40 between the outer panel 28 and the infill panel 38 will be concealed by the lamp cluster 22.

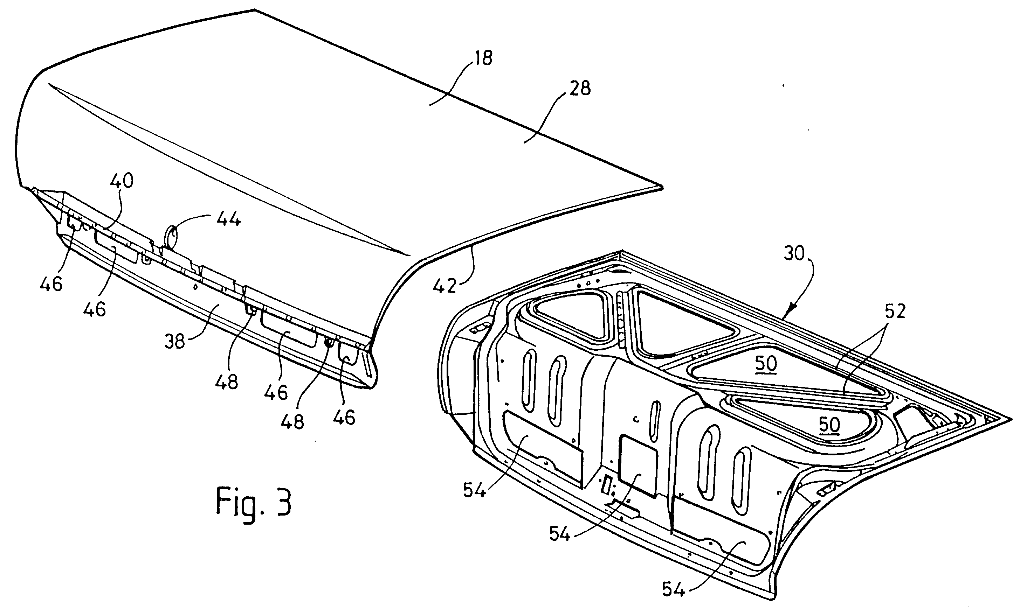

Figure 3 shows the three panels in more detail. The outer panel 28 is generally smooth in form and has a peripheral flange 42 for clinching over the inner panel. The outer panel 42 also has an aperture 44 for receiving the lock barrel 26.

The spot-welded joint at 40 is indicated in Figure 3, and the form of the infill panel 38 can be seen below. The infill panel has apertures 46 through which electrical power can be supplied to the lamp cluster 22, and also fixing holes 48 by which the lamp cluster can be attached to the panel. The main function of the inner panel 30 is to reinforce the outer panel and to give it strength and rigidity. To this end the inner panel has a continuous periphery which will be clinched to the outer panel and to the infill panel, but has apertures 50 surrounded by strengthening ribs 52 in its upper face. The inner panel also has access holes 54 (see also Figure 2) for access to the rear of the lamp cluster for example for changing bulbs.

The luggage compartment described here therefore provides a neat and tidy solution to the problem of mounting a lamp cluster on a rear luggage compartment door. The structure is easy to manufacture, avoids any exposed panel joins and it does not give any increase in overall weight.

## Claims

1. A rear luggage compartment door (18) for a motor vehicle, the door comprising an outer skin panel (28), an inner skin panel (30) and a lamp cluster (22), characterised in that the lamp cluster (22) is mounted on an infill panel (38) which is connected between outer and inner skin panels, and in that the lamp cluster (22) conceals the joint (40) between the outer skin panel and the infill panel.

2. A luggage compartment door as claimed in Claim 1, characterised in that the infill panel (38) provides a mounting surface for the lamp cluster (22) behind the surface of the outer skin panel (28), so that when the lamp cluster is mounted on the infill panel, the front face of the cluster is substantially flush with the outer skin panel (28).

3. A luggage compartment door as claimed in Claim 1 or Claim 2, characterised in that the infill panel (38) is spot-welded to the outer skin panel (28), with the spot-weld being concealed by the lamp cluster.

4. A luggage compartment door as claimed in any preceding claim, characterised in that the connection of the infill panel (38) to the inner skin panel (30) is through a clinched flange (36).

5. A luggage compartment door as claimed in any preceding claim, characterised in that the shape of the infill panel (38) is such that when the luggage compartment door (18) is seen in cross section, parallel to the vehicle centreline, a generally rectangular recess is formed at the bottom rear edge of the door, with the back of this recess formed by the infill panel (38) and the roof of the recess formed partly by the infill panel (38) and partly by a flange (34) of the outer skin panel (28) to which the infill panel is spot-welded.

## Patentansprüche

1. Eine Heckkofferraumklappe (18) für ein Kraftfahrzeug, wobei die Klappe eine Außenverkleidung (28), eine Innenverkleidung (30) und eine Beleuchtungsgruppe (22) umfaßt, dadurch gekennzeichnet, daß die Beleuchtungsgruppe (22) auf einem eingesetzten Teil (38) befestigt ist, das zwischen der Außen- und Innenverkleidung eingefügt wird, und dadurch, daß die Beleuchtungsgruppe (22) die Nahtstelle (40) zwischen der Außenverkleidung und dem eingesetzten Teil verdeckt.

2. Eine Kofferraumklappe nach Anspruch 1, dadurch gekennzeichnet, daß das eingesetzte Teil (38) eine Befestigungsfläche für die Beleuchtungsgruppe (22) hinter der Oberfläche der Außenverkleidung (28) bereitstellt, so daß, wenn die Beleuchtungsgruppe auf das eingesetzte Teil montiert wird, die Vorderseite der Gruppe im wesentlichen bündig mit der Außenverkleidung (28) abschließt.

3. Eine Kofferraumklappe nach Anspruch 1 oder 2, dadurch gekennzeichnet, daß das eingesetzte Teil (38) auf die Außenverkleidung (28) punktgeschweißt wird, wobei die Punktschweißung von der Beleuchtungsgruppe verdeckt ist.

4. Eine Kofferraumklappe nach irgendeinem der vorhergehenden Ansprüche, dadurch gekennzeichnet, daß die Verbindung zwischen dem eingesetzten Teil (38) und der Innenverkleidung (30) aus einem genieteten Flansch (36) besteht.

5. Eine Kofferraumklappe nach irgendeinem der vorhergehenden Ansprüche, dadurch gekennzeichnet, daß das eingesetzte Teil (38) so geformt ist, daß, wenn die Kofferraumklappe (18) parallel zu der Fahrzeugmittellinie im Querschnitt betrachtet wird, eine im allgemeinen rechteckige Vertiefung an der unteren Hinterkante der Heckklappe gebildet wird, wobei die Rückseite dieser Vertiefung von dem eingesetzten Teil (38) gebildet wird und die Decke der Vertiefung teilweise von dem eingesetzten Teil (38) und teilweise von einem Flansch (34) der Außenverkleidung (28), an die das eingesetzte Teil punktgeschweißt ist, gebildet wird.

## Revendications

1. Porte de compartiment bagages arrière (18) pour un véhicule à moteur, la porte comprenant un panneau de carrosserie externe (28), un panneau de carrosserie interne (30) et un assemblage de feux (22), caractérisée en ce que l'assemblage de feux (22) est monté sur un panneau de remplissage (38) qui est connecté entre les panneaux de carrosserie externe et interne, et en ce que l'assemblage de feux (22) cache le joint (40) entre le panneau de carrosserie externe et le panneau de remplissage.

2. Porte de compartiment bagages selon la revendication 1, caractérisée en ce que le panneau de remplissage (38) fournit une surface de montage pour l'assemblage de feux (22) derrière la surface du panneau de carrosserie externe (28) de sorte que, lorsque l'assemblage de feux est monté sur le panneau de remplissage, la face avant de l'assemblage est essentiellement à niveau avec le panneau de carrosserie externe (28).

3. Porte de compartiment bagages selon la revendication 1 ou 2, caractérisée en ce que le panneau de remplissage (38) est soudé par points au panneau de carrosserie externe (28), le soudage par points étant caché par l'assemblage de feux.

4. Porte de compartiment bagages selon l'une des revendications précédentes, caractérisée en ce que la connexion du panneau de remplissage (38) avec le panneau de carrosserie interne (30) se fait à travers une bride rivetée (36).

5. Porte de compartiment bagages selon l'une des revendications précédentes, caractérisée en ce que la forme du panneau de remplissage (38) est telle que, lorsque la porte de compartiment bagages (18) est vue en coupe transversale, parallèle à la ligne centrale du véhicule, un évidement généralement rectangulaire est formé sur l'arête arrière inférieure de la porte, l'arrière de cet évidement étant formé par le panneau de remplissage (38) et le toit de l'évidement étant formé partiellement par le panneau de remplissage (38) et partiellement par une bride (34) du panneau de carrosserie externe (28) sur lequel le panneau de remplissage est soudé par points.
